# EUROPEAN PATENT APPLICATION

(11) **EP 2 835 246 A1**
(43) Date of publication of application: **11.02.2015**
(21) Application number: 13003889.6
(22) Date of filing: 05.08.2013
(51) Int. Cl.: B29C 47/56, B29C 47/08, B29C 47/04, B29B 9/06, B29C 47/12

(54) **Method and apparatus for producing extruded plastic elements**

(71) Applicant: Ansa Termoplastici S.r.l., 24060 Sovere Bergamo (IT)
(72) Inventor: Conterno, Alessandro, 45468 Mülheim a. d. Ruhr (DE)
(74) Representative: Demski, Siegfried

(57) **Abstract**

The invention relates to a method and apparatus for producing extruded plastic elements, in particular granulated material or calibration targets for further processing. In order to combine several plastic components of a first main component it is intended to feed the first plastic component to a main extruder (111), the transmission of the plasticized plastic component to an allocator (112), the feeding of at least one more plastic component to a co-extruder (114, 115, 116, 117), the transmission of at least one plasticized plastic component, and the feeding of the plastic component intended for extrusion and coextrusion either through the allocator (112) or directly to an extruder nozzle (113), whereby the plastic component are fed to the extruder nozzle (113) partly separately.

## Description

The invention relates to ta method for producing extruded plastic elements, in particular granulated material or calibration targets, for further processing, as well as an apparatus for applying the method and granulated material or calibration targets produced that way.

For the production of granulated or bar-shaped materials intended only for further processing the common process is to feed plasticized plastic material to an extruder nozzle by an extruder. The material is pressed out of the extruder nozzle due to the pressure exerted by the extruder. Those plastic materials are then immediately cut into granulate or possibly used as endless bars when intended for a longer length. The granulated material can then be used for the production of housing parts, covers, household items or similar items. For this purpose those granulated materials are produced and made available to the producers of said plastic products.

When forming the different plastic products the granulated material can be used in various ways and offer the advantage that the granulated material is already prepared in so far that the colour or certain features of the plastic materials can be achieved through the co-extruded materials. Thus, a mixture and adjustment of the materials when producing the final products become unnecessary. The raw materials added in the form of a granulated material can thus simply be fed to the shape former, which considerably eases its use. A continuous production in the field of plastic processing without longer disruptions is therefore possible. Mix ratios of a first plastic component and further plastic components are kept exactly as demanded.

It is preferred that a form of granulated material is offered which consists of a core-jacket-structure, as for example described in JP-A-7-171. Here a basic raw material with a high adhesive strength is used as a core and a crystallized polyolefin with a lesser adhesive strength, for example, is used as a jacket to solve the problem that those granulated materials made of strongly adhesive materials may block each other.

The DE 60 36 578 T2, for example, discloses the production of a core-jacket-structure, where a first plastic component is used for the formation of the core and a second plastic component is used for the formation of the jacket. Those are produced by means of an apparatus which presses the basic material being fed by an extruder out of an existing extruder nozzle. Within the extruder nozzle the second plastic material is added in such a way that it covers the basic material in the form of a jacket.

In addition to the bar-shaped ones, granulated materials can be offered in a sheet form consisting of several plastic materials in an arrangement in layers.

The known methods for producing the granulated materials or calibration targets still have the disadvantage that huge amounts of each plastic component are to be provided by the extruders, which results in a lot of plastic materials needed in the production process due to the size of the extruder. This partly leads to an excessively high use for components with a small percentage, especially with relatively expensive plastic components, resulting in increased production costs. The expensive plastic components have to be disposed in case of a replacement, which results in further costs. In addition, the length of the stay of the plastic components within the extruder extends when comparatively large extruders are used, which may also alter the characteristics.

Prior art discloses a method featuring a first large main extruder and a second extruder offering only the possibility to produce a core with a jacket as granulated material due to the way of feeding. This approach is highly inflexible. Additionally, there is only a limited possibility to use different material components.

The invention at hand is based on the task of showing a new method and an apparatus providing a high flexibility in regard to the plastic components to be combined.

According to the invention said task is solved by first feeding a first plastic component to a main extruder and subsequently transmitting the plasticized plastic components to an allocator, then feeding at least one more plastic component to at least one co-extruder, the transmission of the at least one plasticized plastic component and the feeding of the plastic components intended for extrusion and co-extrusion through the allocator or directly to an extruder nozzle, whereat the plastic components are at least partly separately fed to the extruder nozzle. Other advantageous embodiments of the invention arise from the sub-claims.

The insertion of an allocator between the extruders and the extruder nozzle with a separated transmission of the plastic components to the extruder nozzle leads to several advantages. The number of co-extruders, for example, can be increased arbitrarily, whereat each of them processes a certain plastic component, which is then fed through the allocator or partly separately directly to the extruder nozzle. The main extruder is connected to the allocator, whose plastic components are also fed to the extruder nozzle separately. Therefore, the possibility to feed different materials to the extruder nozzle with the help of the co-extruders exists, whereat it is possible at any time to enable or disable an individual co-extruder. Therefore, there is the basic advantage that the base material of a first plastic component can be used on demand with a plurality of at least one further plastic component or with several further plastic components simultaneously for producing restiform or plate-shaped plastic materials. Here a co-extrusion of a further plastic component occurs at the extruder nozzle, which allows for any different form of the exiting material. The extruded plastic materials may either be cut immediately after exiting the extruder nozzle or be produced in large quantities to be subsequently cut. Thus, the intended granulated material featuring a certain mix ratio of the extruded plastic component as base material and the added further extruded plastic components co-extrusion material is achieved. Here any mix ratios are possible, which are then kept exactly during production. The number of the plastic components to be processed merely depends on the number of feeding channels and co-extruders. A basic advantage is given due to the fact that for each plastic component one co-extruder at a time is used that does not have to be replaced, which reduces losses. The co-extruders are here separately enabled or disabled, so that any combination of the base material and further plastic components can be achieved.

Generally, only a small amount of co-extruded plastic components is needed in addition to the base material. This is partly a matter of relatively high-quality and expensive plastic components, which provide a certain advantage of the final product. This could possibly be the colour, the gloss level or certain material properties, which are affected by the added co-extruded material. Since those additional co-extruded plastic components are generally traded in bigger amounts they result in high costs, even though only small amounts are needed. With the aid of the solution provided, the possibility to enable and disable individual co-extruders and thus to choose only a certain plastic component exists, whereat the co-extruder is only enabled on demand and thus allows for a feeding of a certain plastic component upon demand. A replacement of the co-extruded plastic components is not intended here but rather a continuous use of the co-extruder, which is only being disabled when this certain plastic component is no longer needed. Here the allocator can allot the feeding, blocking or by-passing of an individual or several plastic components. Therefore, the considerable advantage exists, that the base material can be combined with further plastic components, which are individually co-extruded in order to achieve a certain chosen mixture, which can be further processed without any additional additives.

The allocator separates the main stream of the first plastic component from the main extruder into several material flows. Furthermore, the allocator can feed the flow from the co-extruders with selective changing plastic components separately to the extruder nozzle. The plastic components of the co-extruders may also be fed to the extruder nozzle directly. The main extruder plasticizes and mixes the base components consisting of a first plastic component, but may also contain already amounts of further additives, on demand. The main extruder is a relatively large extruder which is therefore more inflexible. The material passes though the extruder for a longer period of time and is thus exposed to the influence of heat noticeably longer, which may overstrain the material. The main extruder is fed through a feed unit, which feeds the individual components either as a pure base product or with immediate admixture to the main extruder.

The chosen plastic components, the base material on the one hand and the co-extruded plastic components on the other hand, are fed separately to the extruder nozzle and are divided into different component flows, allowing for different shapes to be formed, such as hollow chamber frames, pipes, plates or endless bars consisting of full material. Calibration targets in the extrusion area or water baths in the granulation areas subsequently give the final shape to the object by cooling it down to a certain temperature.

The use of an allocator for a base material of a first plastic component and a further plastic component can be used both for the production of granulated material and calibration targets, such as hollow chamber plates or panels.

An embodiment of the invention intends for the plastic elements to feature 30 % to 90 %, preferably 50 % to 80 %, of the first plastic component. This is the base material of the first plastic component. The plastic elements can feature a percentage of 10 % to 50 % of at least one further plastic component. Furthermore, the possibility to combine further plastic components with the base material exists. Therefore, the plastic elements can feature a percentage of 1 % to 10 % of the further plastic components, whereat in particular cases up to 10 different additional plastic components can be fed together or on demand.

The further plastic components are here combined unmixed with the first plastic component, that is co-extruded, which results in the advantage that the granulated material produced according to this method does not require any further additives in further processing to obtain certain features. Therefore, the possibility to already produce the desired mix-ratio during extrusion of the granulated materials exists, allowing for a simplified further treatment.

In a special embodiment of the invention it is intended for several co-extruders to be connected to the allocator according to the method described, whereat merely one individual or several selectable plastic components of the co-extruder are temporarily fed to the extruder nozzle. This may occur in a way in which the co-extruder separately feeds one respective plastic component through the allocator to a feeding channel of the extruder nozzle, or in which the allocator is suitable to block the further plastic component, or to by-pass them to the intended feeding channels. Thus, the base material, e.g., may be provided with a jacket layer, which may consist of different plastic components as per the intended use. Furthermore, a possibility to co-extrude the base material not only with one but with several jackets if desired or even segmentally exists, so that further plastic components are distributed over the circumference. For this purpose the allocator is intended for the feeding, blocking and by-passing of the respective plastic component.

The method for producing granulated materials of the invention at hand allows for the use of different resin materials usually suitable for producing granulated materials as form materials. The raw materials may consist of solids, powders or liquids. In case a production of a multi-layer granulated material is desired, the further plastic component is fed through the co-extruder to the extruder nozzle. The extruded multi-layer strand is cut by a granulator, depending on the demand before or after it is cooled down, and additionally shaped if needed. Usual cooling methods, such as dipping the multi-layer strand into cooling water in a tank, are suitable. The granulator cuts the multi-layer strand by means of a rotating knife or similar devices into a given length. By cutting the multi-layer strand as it exits the extruder nozzle, double-columnar multi-layer granulated materials featuring both the base material and the jacket material are realized. By rounding the cut end faces spherical or ellipsoid shaped or discpoidal multi-layer granulated materials can be produced, whose circumference, including the end faces of the base material, can be covered by the jacket material. Alternatively the base material can be covered with further jacket material in segments of the circumference, whereat the further plastic component does not have to cover the base material completely.

Furthermore, it is possible to achieve production in a plate, whereas the base material of a first plastic component is used as a carrier and further plastic components are co-extruded onto said carrier. The number of layers can be chosen at will.

Alternatively this method also offers the possibility to produce calibration targets, e.g. hollow chamber plates or panels, whereas individual jackets or stop ridges can be produced from different plastic components.

Typical mix ratios of the produced granulated materials consist of 15 wt % or more for organic pigments, 35 wt % or more for inorganic pigments, 25 wt % or more for inorganic additives and 5 wt % or more for organic additives.

In order to influence the features of a natural resin or the fluidity of said resin preferably thermoplastic resins are used which are similar or identical to a natural resin. As base material and co-extruded plastic components preferably the same or similar thermoplastic resins are used. The co-extruded plastic components can be enriched with pigments and/or additives.

Polypropylene, polyethylene, AS-resin, ABS-resin, (Meth)acryl-resin, resin on a vinyl chloride basis, poly(vinylidene chloride), poly(vinyl acetate), polyolefin, polyethylene-terephthalate, polybutylene terephthalate, polyacetal, polycarbonate, polyamide, acetylcellulose, fluorinated resins, polyester-resin, aryl resin, silicon resin and thermoplastic elastomers can be uses as thermoplastic materials for providing the base material. Preferably polystyrene, polypropylene, polyethylene, polyethylene terephthalate and polyamide are used, whereas those thermoplastic resins are used individually or in a mixture of two or more components.

The plastic components may at least be partly enriched with additives.

As a pigment for the plastic component intended for extrusion or co-extrusion any known organic pigment, inorganic pigment, diluent or such can be used. Examples of an organic pigment are azo-pigments such as insolvable and condensed azo, a Thren system such as anthraquinone, perinone, perylene and thio-indigo, a phthalo-cyanine system such as phthalo -cyanine blue and phthalo -cyanine green, a nitrous dye such as naphthol green B and naphthol green Y, quinacridone, dioxazine, isoindolione, pyrropyrrole, analine black and organic fluorescent pigments. Examples of an inorganic pigment are natural pigments such as clay, barite, mica, etc., ferro-cyanide such as Prussian Blue, etc., sulfide such as zinc sulfide, etc., sulfate such as barium sulfate, etc., oxide such as chrome oxide, zinc white, titan white, red iron oxide, iron black, chrome oxide, etc., hydroxide such as aluminum hydroxide, silicate such as calcium silicate, ultra marine blue, etc., carbonate, such as calcium carbonate, magnesium carbonate, etc., carbon such as carbon black, chimney black, bone black, graphite, etc., metal powder such as aluminum powder, bronze powder, zinc powder, etc. and other burnt pigments. Examples of a diluent are calcium carbonate, barium sulfate, talcum, etc., Those pigments are to be used individually or as a mixture of two or more kinds. Dyes can be used in an amount that does not influence the properties of the resin.

Additives to the plastic components intended for extrusion or co-extrusion are used to improve the properties of the resin, such as machining properties, flexibility, elasticity, brittleness, manageability, etc., the characteristics of the resin, such as stability, endurance, heat isolation, etc., and the manageability, such as mold release, kneading, etc., and are not particularly limited as long as they do not cause a pyrolysis when being added. Examples are softeners, antioxidant agents, UV-absorbance agents, light-stability agents, inflammation restrainers, antibiotics, antistatic agents, copper inhibitors, metal deactivators, glues, greases, lubricants, internal mold release agents, steam extraction agents such as drop oppressors, steam drop oppressors, deodorants, tensides, moistening agents, conservation agents, fillings, reinforcing agents, stabilization agents, heat isolators, foaming agents, wetting agents, impact resistance improvers, surfactants and dispersants.

As softeners for the plastic components intended for extrusion or co-extrusion phthalate derivatives such as dimethyl phthalate, dibutyl phthalate, diethyl phthalate, diheptyl phthalate, di-2-ethylhexyl phthalate, octyldecyl phthalate, etc., phthalate-acid isomers such as di-methyl liso-phthalate, di-octy liso phthalate, etc., tetra hydrophthal-acid derivatives such as di-2-ethylhexyltetrahydro phthalate, etc., phosphate derivatives such as tri-phenyl phosphate, tri-chlorethyl phosphate, bi-sphenol A di-phenyl phosphate, etc., adipine acid derivatives such as di-methyl adipate, di-butyl adipate, di-isodecyl adipate, di-isobutyl adipate, etc., sebacine acid derivations such as di-n-butyl sebacate, di-n-octyl sebacate, butyl benzyl sebacate, azelaic acid derivatives such as d-2-ethylhexylazelate, di-methyl azelate, di-benzyl azelate, etc., a citric acid system such as tri-ethyl citrate, acetyl tri-ethylcitrate, tri-butyl citrate, etc., an epoxy-system such as epoxidized soy bean oil, epoxy stearin butyl, epoxy stearin octyl, etc., a polyester system such as polypropylene adipate, polypropylene sebacate, etc., a chlorinated system such as chlorinated paraffin, chlorinated beialphtistic ester, etc., a glycol acid system such as methyl phthalyl ethyl glycolate, ethyl phthalyl ethyl glycolate, etc., a tri-mellithe acid system such as tri-2-ethylhexyltrimellitat, etc., a ricinole acid system such as methyl acetyl ricinoleate, butyl acetyl ricinoleate, etc., buyloleate, etc., are intended. Those compounds can be used individually or in combination of two or more compounds.

Examples of an antioxidant agent for the plastic component intended for extrusion or co-extrusion are a phenol system such as 2,6- di-t-butyl-p-cresole, pentaerythritoltetrakis-(3,5-di-t-butyl-4-hydroxyphenyl)propionatmethylphenole, octadecyl-3-(3,5-di-t-butyl-4-hydroxyphenyl)propionate, etc. a phosphor system such as tris(2,4-di-t-butylphenyl)phosphate, distearylpentaerythritoldiphosphate, tetrakis(2,4-di-t-butylphenyl)-4-4'- biphenylphosphonate, etc., a sulphur system such as distearyl-3-3'-thiodipropionate, pentaerythritol-tetrakis-(3-laurylthiopropionat), etc., Those compounds can be used individually or in combination of two or more compounds.

Examples of an UV- absorbance agent and of a light-stability agent for the plastic components intended for extrusion or co-extrusion are salicylic acid derivatives such as phenylsalicylate, p-t-Butylsalicylate, etc., a benzophenon system such as 2,4-Dihydroxybenzophenone, 2-Hydroxy-4-methoxybenzophenone, a benzotriazol system such as 2-(2'-hydroxy-3',5'-di-tbutylphenyle) benzotriazole, 2-(2'-hydroxy-3'-t-butyl-5'-methylphenyle)-5-Chlorbenzotriazole, etc., a restrained amine system such as bis(2,2,6,6-tetramethyl-4-piperidyl)sebacate, dimethylsuccinate-1-(2-hydroxyethyl)-4-hydroxy-2,2,6,6-tetramethylpiperidine condensate product, etc. Again those compounds can be used individually or in combination of two or more compounds.

Examples of an inflammation restrainer for the plastic component intended for extrusion or co-extrusion are a phosphor acid system such as alkyldiallylphosphate, cresyldiphe-nylphosphats, octyldiphenylphosphate, triallylphosphate, tributylphosphate, triphenylphosphate, tris(chlorethyl)phosphate, tris(dichlorpropyl)phosphate, tris(2,3-dibrompropyl)phosphate, tris(brom-chlorpropyl)phosphate, etc., a chlorine system such as chlorinated paraffin, chlorinated polyphenyle, perchlorpentacyclodecane, etc.. a bromine system such as tetrabromethane, tetrabrombutane, hexabrombenzene, decabromdiphenyloxide, polydibromphenyloxide, bis(tribromphenoxy)ethane, ethylenbisbromonorbomane, dicarboxyimide, ethylenbistetrabromphthalimide, etc. a reaction type such as chloricacidhydride, tetrabromphthalanhydride, tetrabrom-bisphenole A, diethoxy-bis-(2-hydroxyethyl)-aminomethylphosphate, dibromcresylglycidylether, etc.. Those compounds can be used individually or in combination of two or more compounds. It is also possible to simultaneously use the stabilization agent for the inflammation restrainer, such as a stabilization agent on an epoxy basis.

As antibiotics for the plastic components intended for extrusion or co-extrusion antibiotics on a phenolether basis, those having the phenol group within the intra-molecule skeleton, such as 10,10'-oxybisphenoxaarsin, etc. can be exemplified, as natural antibiotics those having a tropolone as central skeleton, such as hinokitiole, dolabuline, etc., as glycerol ester a fatty acid, mono glycerol ester of a low-molecular fatty acid, sucrose fatty acid ester, poly glycerol fatty acid ester, e.g., mono glyceride caprylate, mono glyceride caprate, laurin acid-mono glyceride, sugar ester palmitate, deca glycerol mono caprate, hexa glycerol caprylate, etc., in compounds on a zeolite basis as parts of any interchanging ions in compounds on a zeolite basis, for example any sodium ions, calcium ions, potassium ions, magnesium ions, iron ions, etc., are replaced by ions with antibacterial characteristics, such as silver ions, copper ions, zinc ions, ammonium ions, etc.. Those compounds can be used individually or in combination of two or more of them.

Examples of an antistatic agent for the plastic component intended for extrusion or co-extrusion are a cation system such as quarter ammonium chloride, quarter ammonium sulfate, etc. an anion system such as alkylsulfonate, alkylenzensulfonate, etc, a non-ionic system such as Poly(oxyethylen)alkylamine, Poly(oxyethylen)alkylamide, etc., an amphoteric system such as an alkylbetain type, alkylimadazolium type, etc., a conducting resin such as polyvinylenzly type cation, polyacrlyacid type cation, etc.. Those compounds can be used individually or in combination of two or more of them.

Examples of copper inhibitors and metal deactivators for the plastic component intended for extrusion or co-extrusion are 1,2,3 benoztriazole, tolytriazolamine salt, tolyltriazolnatrium salt, 3-(N-salicyl oil)amino-1,2,4-triazol, etc. Those compounds can be used individually or in combination of two or more of them.

Examples of a glue for the plastic component intended for extrusion or co-extrusion are coumarone resin system such as coumarone inden resin, a mixture of coumarone resin, oil on a naphten basis, phenol resin, kolophonium, etc., a resin system on a phenolterpen basis such as p-t-butylphenolacetylen-resin, phenolformaldehyde-resin, terpenphenole-resin, polyterpen-resin, Xylenformaldehyd-resin, etc., a synthetic polyterpen-resin system such as Quinton A100 (by Nippon Zeon), Wingtack95 (by Goodyear Chem), etc. a resin system on the basis of aromatic hydrocarbons such as Nisseki Neo Polymer 120, Nisseki Neo Polymer 160, Nisseki Neo Polymer T, a resin system on the basis of aliphatic hydrocarbons such as Escorez 1202U (by Exxon Chemical), Escorez 1271 (by Exxon Chemical), Tackirol 1000 (by Sumitomo Chemical), Tackirol 5000 (by Sumitomo Chemical), Piccopale (by Hercules), etc., a resin system on the basis of aliphatic -cyclic hydrocarbons, such as Escorez 1202U (by Exxon Chemical), Escorez 1271 (by Exxon Chemical), Tackirol 1000 (by Sumitomo Chemical), Tackirol 5000 (by Sumitomo Chemical), Piccopale (by Hercules), etc., a mineral oil resin system on the basis of aliphatic-cyclic hydrocarbons, such as Escorez 1401 (by Exxon Chemical), an aliphatic aromatic mineral oil resin system such as Escorez 2101 (by Exxon Chemical), Escorez 2203 (by Exxon Chemical), a polymer system on the basis of unsaturated hydrocarbons, such as Escorez 8030 (by Exxon Chemical), etc., a resin system on the basis of hydrogen added hydrocarbons such as Escorez 5380 (by Exxon Chemical), Escorez 5300 (by Exxon Chemical), etc. a glue resin system on a hydrocarbon basis such as VS RESIN 7 (by Yasuhara Chemical), Piccotac Resins A (by Hercules), etc., a hydrocarbon resin system on a mineral oil basis such as poly butane, atactic polypropylene, poly butadiene in a liquid form, cis-1,4-polyisopren- rubber, hydrogen added poly isoprene-rubber, claprene LIR -290 (by Kuraray), etc., a system on the basis of colophony derivations such as pentaerythritolester of colophony, glycerol ester of colophony, colophony hydride, methyl ester of highly developed colophony, methyl ester of colophony hydride, Tri ethylene glycol ester of colophony hydride, penta erythritol ester of colophony hydrid, hydrogen added colophony ester, ester resin-system with a high melting point, polymer isierer- colophony, resin acid zinc, hardened colophony, etc., a glue on the basis of turpentine, copyl condensate products made of a synthetic resin and phthalate, non-ionic activator, etc., and their compounds. Those compounds can be used individually or in combination of two or more of them.

Examples of a grease and lubricant are a paraffin wax system such as fluidized paraffin, natural paraffin, micro wax, polyethylene wax, chlorinated paraffin, fluorine carbon, synthetic paraffin, etc., a fatty acid system such as stearin acid, palmintin acid, myristin acid, behen acid, arachidin acid, etc., a system of an aliphatic amid such as aliphatic amid, aliphatic alkylen-biamid, etc., an alcohol of a low molecular fatty acid such as buylstearat, etc., an ester system such as polyalcohol, poly glycol ester, higher alcohol esters, etc., a metallic soap such as magnesium stearate, calcium stearate, iono zinc, etc., a polyalcohol system such as fatty alcohol, ethylene glycol, di-ethylene glycol, triethylene glycol, etc., a part ester of fatty acid and polyalcohol, part ester of fatty acid and poly glycol-poly glycerol, etc.. Those compounds can be used individually or in combination of two or more of them.

Examples of an internal mold release agent are per-fluorine alky-betain, per-fluorine alkyl ethylene oxide adduct, ether type-phosphate, a synthetic organic acid ester derivative, activator on a non-ionic basis, etc.. Those compounds can be used individually or in combination of two or more of them.

Examples of a steam extraction agent (drop oppressor, steam drop oppressor) are a sorbitane-fatty acid-system such as Mark 39 (by Adeka Argus Chemical), Leodol SP-P10 (by Kao), Leodol SP-O10 (by Kao), AD-339 (by Sakai Kagaku), Rheostat SS-60 (von Lion), Remarkel P-300 (by Riken Vitamin), Remarkel S-300 (by Riken Vitamin), Remarkel O-250 (by Riken Vitamin) etc., Resistat AF101 (by Dai-ichi Kogyo Seiyaku), Resistat 8200 (by Dai-ichi Kogyo Seiyaku), Antox DFM (by Nihon Nyukazai), PA-1743 (by Marubishi Yuka), PA-5221 (by Marubishi Yuka), Denon 4190 (by Marubishi Yuka), Rheostat DGS (B) (by Lion), Remarkel S-105 (by Riken Vitamin), Remarkel S-120 (by Riken Vitamin), poly ethylene glycol mono olate, poly ethylene glycol mono laulate, etc.. Those compounds can be used individually or in combination of two or more of them.

Examples for deodorants are peroxides such as Alamask AF (by Launne Poulan), Alamask AO (by Launne Poulan), Alamask CY (by Launne Poulan), Alamask H (by Launne Poulan), Alamask ND (by Launne Poulan), Rodo No. 0 (by Bander Built), Rodo No. 4 (by Bander Built), Rodo No. 10 (by Bander Built), sodium bore hydride, lithium bore hydride, phthalan hydride, sodium perborat, etc., vanilla essence, etc. Those compounds can be used individually or in combination of two or more of them.

Examples of tensides used are anionic tensides such as carboylate, hypo borate, cyclic hypo borate, a certain activator of the poly-carb oxylate type, sulfonate, alkyl or alkenyle sulfonate, alkyl allyl sulfonate, poly condensated products of alkyl allyl sulfonate, sulfate, alkyl sulfate, poly oxy ethylene-alkyl ether sulfate, poly oxy ethylene-alkyl phenyl ether sulfate, phosphate, alkyl phosphate, poly oxy ethylene-alkyl(phenyl)ether phosphate salt, inorganic phosphate, etc. , non-ionic tensides such as poly oxy ethylene derivations, poly oxy ethylene alkyl ether, poly oxy ethylene alkyl phenyl ether, poly oxy ethylene-poly oxy propylene-block polymer, poly oxy ethylene alkyl amine, poly oxy ethylene alkyl amid, derivations on an polyalcohol basis, etc., cationic tensides such as alkyl amine salt, quarter ammonium salt, etc., amphoteric tensides such as alkyl betain, etc. a tenside on a fluorine basis, a tensed on a silicon basis, a reactive tenside, etc.. Those compounds can be used individually or in combination of two or more of them.

Examples of a wetting agent used are a alkyl naphthalene sulfonate, alkyl sulfon succinate, sulfate, poly oxy ethylene derivations such as Adekatol NP-675 (by Asahi Denka), Hionic DE Series (by San Nopco), Nopco 2272-R-SN (by San Nopco), Nopco Wet 50 (by San Nopco), Nopco Wet 50 (by San Nopco). Those compounds can be used individually or in combination of two or more of them.

Examples of antiseptics and fungicides are a system of an organic chlorine compound such as penta-chlorine phenol, p-chlorine-m-xylenole, de-hydro-obi-ethyl amine pentachlorphenole (by Hercules), 4-chlorine-2- phenyl phenol, N-(tri chlorine methyl-thio)phthalimide, N-Dimethyl-N'-Phenyl-(N'-fluor di chlorine methyl thio)sulfamide, N-(tri chlorine methyl thio)-4-chlorhexan-1,2- di carboxyimide, 2,4,5,6-tetrachlorine-Isophthalonitril, etc., organic copper compounds such as copper-8-quinolinolate, etc., a system of an organic tin compound such as sis(tri-n-butyl tin)oxide, tri butyl tin laulat, tri butyl tin chloride, etc., a system of an organic cyanide compound such as 10,10'-oxybisphenoxazin (by Bentron), vinyzene SB-1 (by Morton Tiokol), vinyzene SB-5-2 (by Morton Thiokol) etc,., quarter ammonium carboxylat (by Rohm & Haas), 2-(4-thiazolyl)benzimidazol, etc.. Those compounds can be used individually or in combination of two or more of them.

Examples of fillings are aluminum, antimony tri-oxide, asbestos, barite, calcium carbonate, gipsanhydride, kaolitone, carbon black, diatomaceous earth, feldspar powder, acid clay, quartz, graphite, magnesium carbonate, magnesium hydroxide, magnesium oxide, mica, molybdenum sulfate, agal matolhton, sericit, fine silicate, silicide, slate powder, talcum, titan oxide, vermiculite, volcanic ash, precipitate chalk, sedimented calcium carbonate, ground calcium carbonate, hydrate silicate, silicic acid anhydride, hydrate silicate, kaolinton, hard clay, sintered clay, fine talcum, etc.. Those compounds can be used individually or in combination of two or more of them.

Examples of a reinforcing agent for the plastic component intended for extrusion or co-extrusion are glass fibers, roving, cut glass fibers, chopped glass strand mats, woven glass, glass sheets, roving woven, short fibers, etc.. Those compounds can be used individually or in combination of two or more of them.

Additionally a so-called water-prohibiting material can be used as an additive. The water-prohibiting material is a material which loses those characteristics it had as an additive when reacting to water or when coming in contact with water. However, when using the water-prohibiting material according to the invention mainly for the first plastic component and using a thermoplastic resin which is inactive towards water for a further plastic component it allows for the production of a granulated material containing a water-prohibiting material. Examples of a water-prohibiting material are an adsorption agent, an agent producing oxygen, an agent producing carbon dioxide, an agent producing ethyl alcohol, an agent producing acid sulfur gas or an oxygen adsorption agent, etc.. Examples of an adsorption agent are silica gel, aluminum oxide, a synthetic zeolite depicted as molecular sieves, natural zeolite such as mordenite, erionite, etc.. Clay minerals such as perlite, acid clay, activated clay, etc., porous glass, magnesium silicate, aluminum silicate, polymer adsorption agents, activated carbon, activated carbon,fibers, molecular sieve carbon, bone carbon, calcium oxide, calcium silicate, calcium chloride, calcium bromide, barium oxide, barium bromide, barium perchlorate, aluminum sulfate, magnesium chloride, magnesium oxide, magnesium sulfate, magnesium perchlorate, aluminum sulfate, sodium sulfate, sodium hydroxide, sodium carbonate, potassium carbonate, potassium hydroxide, zinc chloride, zinc bromide, lithium perchlorate. Examples of an agent producing oxygen are a sodium carbonate hydrogen peroxide adduct system, a calcium peroxide system, a magnesium peroxide system, etc.. Examples of an agent producing carbon dioxide are a system of carbonate / organic acid, a carbonate / amino acid system, an agent producing carbon dioxide on the basis of carbonate / inorganic acid, etc.. As an agent producing ethyl alcohol there is, e.g. an agent producing ethyl alcohol embedded in a water soluble component. For the acid sulfur gas there is, e.g., a sodium hydrogen sulfite system or a sodium pyrosulfite system. Furthermore, an oxygen adsorption agent on a metallic basis such as iron powder. ect. exits as an oxygen adsorption agent and the said oxygen adsorption agent on an ascorbic acid basis. For the thermoplastic resin used for the first component, which is inactive towards water, polyolefin resins such as polypropylene, polyethylene, etc. are preferred from the thermoplastic resins mentioned above.

Furthermore, the invention is based on the task of providing an apparatus for conducting the method.

In order to solve the task, an apparatus for applying the method for producing extruded plastic elements, in particular granulated materials or calibration targets for further processing, is suggested, which comprises at least one main extruder and at least one co-extruder, whereat the main extruder is connected to an allocator feeding the plastic components to the extruder nozzle and the at least one co-extruder is also either connected to the allocator for transmitting a further plastic component or directly to the extruder nozzle.

Therefore, the method according to the invention can be realized with this apparatus, whereat the separate feeding of the individual plastic components is the main focus. Furthermore, the possibility exists to by-pass individual plasticized plastic components of the co-extruders due to the allocator, whereat the transmission of the plastic components produced occurs either in individual feeding channels or in a single feeding channel within the allocator, which can be switched inside the allocator, allowing for feeding different co-extruded plastic materials. For this purpose several co-extruders are grouped around the allocator, so that short ways lead directly to the allocator and the co-extruders can be enabled to the allocator on demand for delivering further plastic components to the extruder nozzle. The co-extruders used are characterized in that they have a remarkably smaller production capacity, so that admixture of further plastic components can be further processed in relatively small and are therefore cost-effective amounts.

A further embodiment intends for the allocator to feature a main feeding channel, which feeds the first plastic component directly to the extruder nozzle, and/or that the allocator features several feeding channels, which are each connected to a co-extruder at one end and are lead to the extruder nozzle with the other one.

In order to increase variability it is further intended for the allocator to feature at least and preferably several switching devices for by-passing plastic materials of one extruder to another feeding channel on demand.

By enabling and disabling individual co-extruders on demand and the due to the possible by-passing of plastic components a high degree of variability is guaranteed, so that, e.g., a plastic component can separately be fed to the base material or several further plastic components intended for co-extrusion can be fed.

The invention at hand is based on the additional task of providing a granulated material for further processing, which allows for an immediate further processing without any further adding of additional plastic components or additives or providing a calibration target, which allows for a high variability of the plastic components used.

The task is solved by producing granulated materials or calibration targets according to the process claims with the help of the apparatus shown, whereat the granulated material in cross-section consists of an inner core, a first plastic component and another co-extruded plastic component. The cross-section of the granulated material can be square, rectangular, polygon-shaped, round or oval, whereat a co-extrusion occurs on the outer surface. With a rectangular cross-section of the base material of a first plastic component a co-extrusion of further plastic components can occur in a sandwich-structured composite on the first plastic component. When the co-extruded plastic components are arranged next to each other over the circumference of the different cross-section profiles, they can cover the first plastic component completely or at least partially. When the co-extruded plastic components are arranged over the circumference of the different cross-section profiles on the outer surface of the first plastic component at least partly overlapping there is the possibility of intending several layers on the base material and therefore increasing the number of the further plastic components to be applied.

In certain embodiments of the granulated material it can be intended to arrange the co-extruded plastic components each in a notch of the first plastic component, i.e. the base material. Those notches may be v-shaped cuts, synclinal cavities or other shapes allowing reception of the further plastic components.

The invention is further explained by means of the figures.
Fig. 1 shows a first embodiment of an extruder arrangement
Fig. 2 shows a second embodiment of an extruder arrangement,
Fig. 3 shows a third embodiment of an extruder arrangement,
Fig. 4 shows a fourth embodiment of an extruder arrangement,
Fig. 5 shows a fifth embodiment of an extruder arrangement,
Fig. 6 shows a sixth embodiment of an extruder arrangement, and
Fig. 7 shows a seventh embodiment of an extruder arrangement.

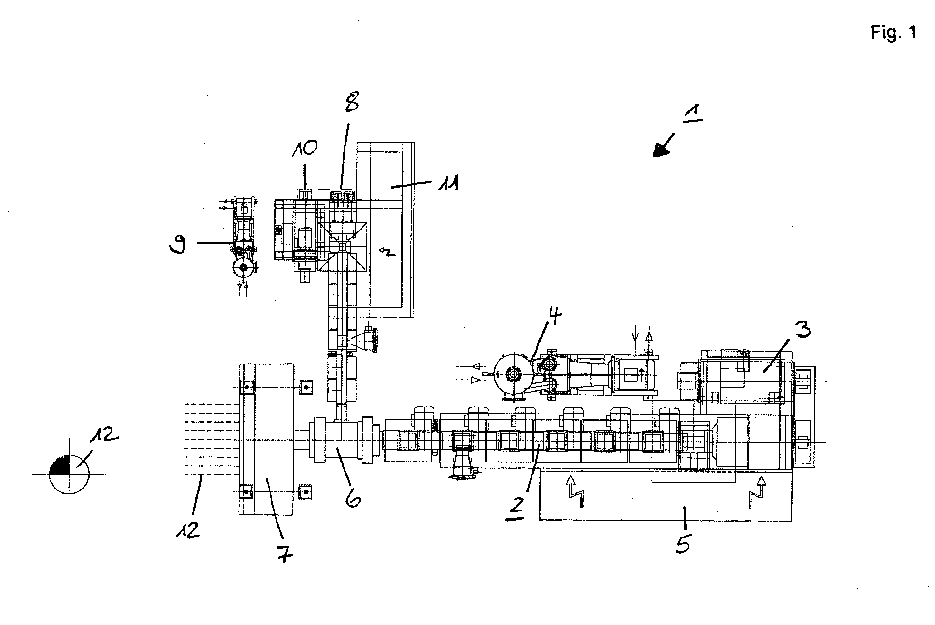

Figure 1 shows a first embodiment of an extruder arrangement 1 for producing extruded plastic elements, here consisting of round bars, which are to be cut into short granulated pieces in a further process step. The extruder arrangement 1 consists of a main extruder 2 with a drive motor 3 and a vacuum pump 4 as well as an electric connection panel 5. The main extruder 2 feeds an extruder nozzle 7 through an allocator 6. Additionally, a co-extruder 8 is connected to the allocator 6, which also features a vacuum pump 9, a drive motor 10 and an electric connection panel 11. By means of the co-extruder 8 a further plastic component is fed to the extruder nozzle 7 through the allocator 6.

The main extruder 2 is in its size intended for feeding a constant material flow of a first plastic component to the allocator and thus to the extruder nozzle, whereat it is the main plastic component which makes up the majority of the finished product. The co-extruder 8, however, is intended for feeding a second plastic component, which possesses a clearly lower percentage in comparison to the first plastic component of the main extruder. Both plastic components are fed to the extruder nozzle through the allocator 6 and result in the production of bar-shaped plastic materials 12. Before further processing those restiformly pressed plastic materials 12 can be cut into small pieces, allowing a granulated material to be further processed. The cross-section of such a restiform plastic material 12 can be seen in the section figure on the left hand side. This embodiment intends ¾ of the plastic material to be delivered from the main extruder 2, while ¼, hued black in the figure, is fed by the co-extruder 8 through the allocator 6. Within the extruder nozzle 7 the two plastic materials are individually fed to the nozzle lip. The cross section of the restiform plastic material shows a quadrant being fed by the co-extruder, while the other three quadrants are fed by the main extruder and the different plastic materials flow together within the extruder nozzle 7 in a way that results in a co-extrusion of the shown form. The form of the bar-shaped plastic material 12 is mostly determined by the extruder nozzle 7 here. The use of a different extruder nozzle 7 could therefore lead to a different cross-section. Here it merely depends on in how far the nozzle lips of the extruder nozzle 7 are shaped for pressing the plastic materials.

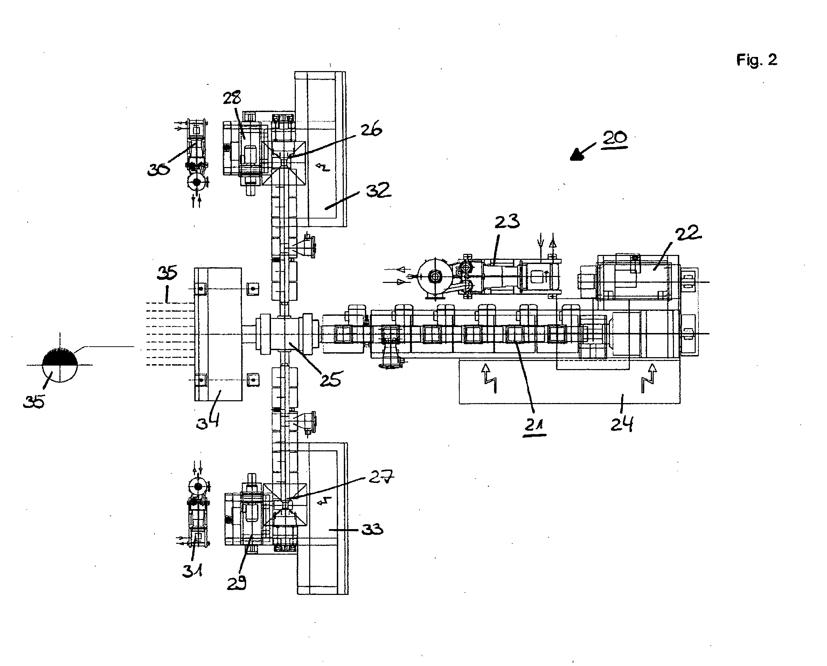

Figure 2 shows a second embodiment of an extruder arrangement 20, once more consisting of a main extruder 21 with a drive motor 22 and a vacuum pump 23 as well as an electric connection panel 24. The materials plasticized by the main extruder 21 of the first plastic components are once more fed to an allocator 25 which is connected to two co-extruders 26, 27 in this embodiment. Both co-extruders 26, 27 again feature a driving motor 28, 29, a vacuum pump 30, 31 and an electric connection panel 32, 33. The individual plastic components separately reach the extruder nozzle 34 through the allocator 25, whereat the extruder nozzle 34 is intended for production of bar-shaped extruded plastic materials 35. The main difference to the first extruder arrangement is the fact that two further co-extruded plastic components are separately fed, whereas obviously about 50 % of the plastic material 3 shown the bar-shaped extruded plastic material 35 is delivered by the main extruder, whereas the two co-extruders deliver each a percentage of 25 % to the extruder nozzle through the allocator 25. Due to the particular geometry of the extruder lip a bar-shaped plastic material 35 is pressed out, which features the first plastic components in two quadrants in seen in cross-section and in each of the other two quadrants a further plastic component of the two co-extruders. In this case it is once more intended to cut the pressed out, extruded bar-shaped plastic material 35 into small granulated pieces, which are then to be used for further processing.

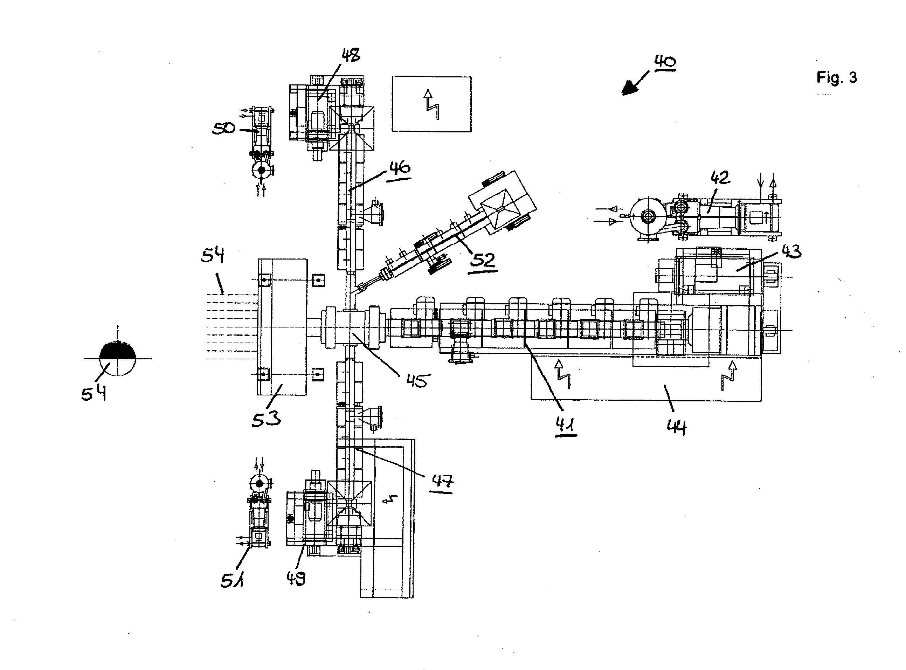

Figure 3 shows a third extruder arrangement 40, which again consists of a main extruder 41 with a vacuum pump 42 and a driving motor 43, as well as an electric connection panel 44. The plasticized plastic materials of the main extruder 41 are fed to an allocator 45, connected to two co-extruders 46, 47. Both co-extruders 46, 47 in turn consist of a driving motor 48, 49, a vacuum pump 50, 5 and the necessary electric connection panels. With this extruder arrangement 40 furthermore a third co-extruder 52 is intended, which is connected by a common access line of the co-extruder 46 to the allocator 45. In this case the individual plastic components are fed to extruder nozzle 53 as well, whereat the said extruder nozzle 53 is intended for the production of bar-shaped extruder materials 54. The individual plastic components of the main extruder 4 on the one hand and of the co-extruder 47 on the other hand are separately fed to the nozzle lip of the extruder nozzle 53 in a way that the individual quadrants as seen in cross-section feature different plastic components of the plastic material. The co-extruders 46 and 52 are connected compared to the further co-extruders 46, 47, so that this plastic component is already mixed when fed to the extruder nozzle 53. The percentage of each plastic component can be set variably. The co-extruder 52 is once more reduced in terms of capacity, and is primarily used for mixing a small percentage of a plastic component to the plastic component of the co-extruder 46.

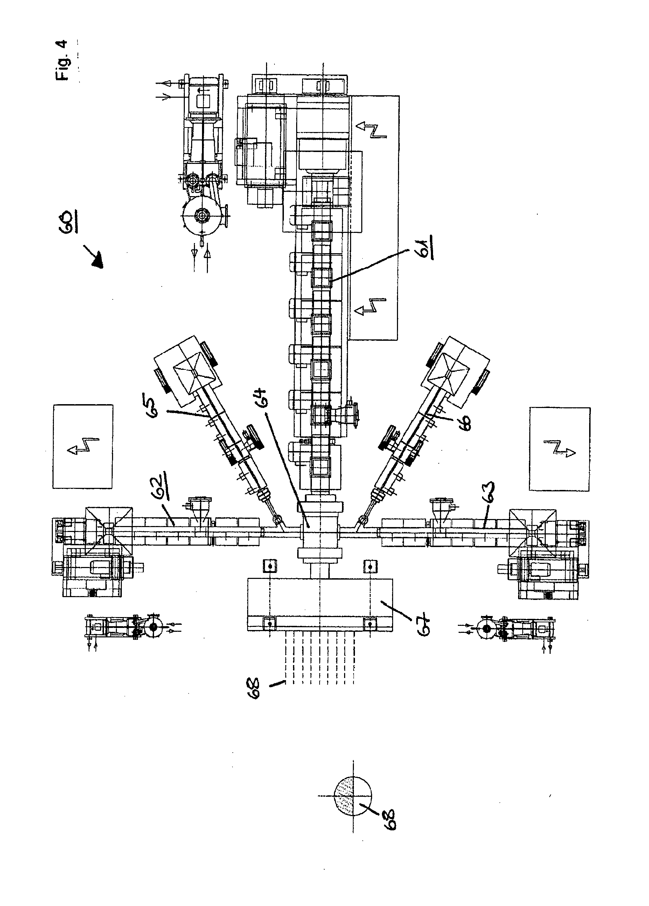

Figure 4 shows a further extruder arrangement 60, consisting of a main extruder 61 which features a similar arrangement as the previous examples and is directly connected to an allocator 64. Furthermore, two co-extruders 62, 63 are intended, which are directly connected to the allocator 64, and two co-extruders 65, 66, which feature a common feeding channel to the allocator 64 with the co-extruders 62, 63. The arrangement of the individual extruders is identical to the previous examples and does not require any repetitive explanation. The individual material components reach the extruder nozzle 67, namely once more for pressing out extruded bar-shaped plastic materials 68. In a cut view the extruded plastic material 68 is depicted. Two quadrants in cross-section are fed by the main extruder 61 while the other quadrants are each fed by the co-extruders 62 and 65 or 63 and 66 respectively. Due to the common feeding of the plastic components of the co-extruders 62, 65 or 63, 66 to the allocator 64 a mixture of those two plastic components occurs, so that there is a mixture of two plastic components in both quadrants. In this way four further plastic components can be fed to a main component.

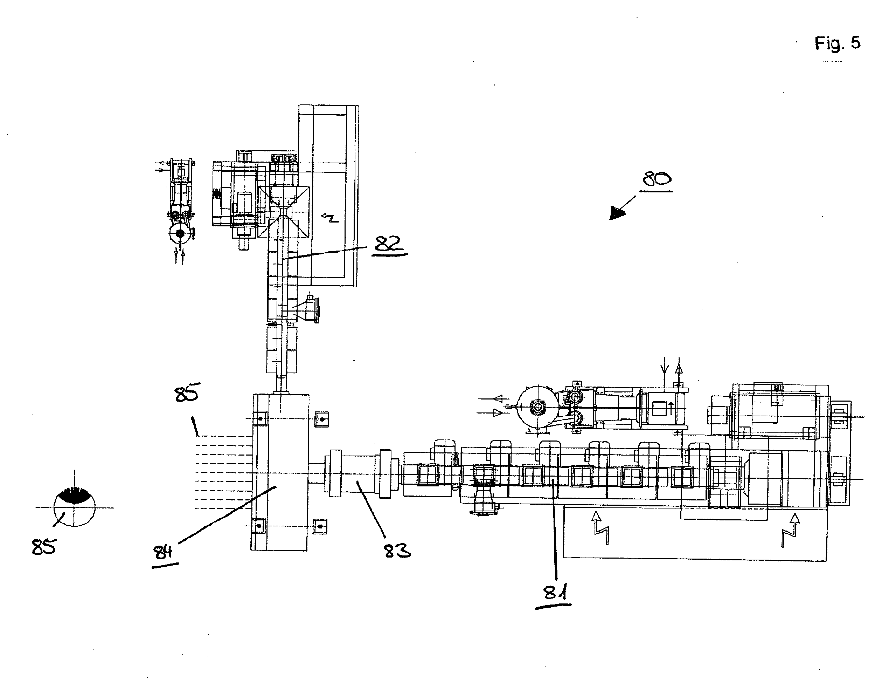

Figure 5 shows a further extruder arrangement 80, consisting of a main extruder 81 and a co-extruder 82. Both the main extruder 81 and the co-extruder 82 feature the same components as the previous embodiments. In this case the feeding of the main component of a first plastic component occurs through an allocator 83, which is connected to the extruder nozzle 84. The co-extruder 82, however, is not connected by the allocator 83 but directly to the extruder nozzle 84. Once more the extruder nozzle 84 intends for a restiform plastic material 85, which is shown in a smaller cross-section. In contrast to the previous embodiments a little more than just two quadrants in the cross-section were fed by the main extruder, while the added plastic component of the co-extruder 82 occurs as a lateral arrangement towards the main component, in the example shown as an ellipsoid. The combination occurs as in the previous embodiments by means of co-extrusion.

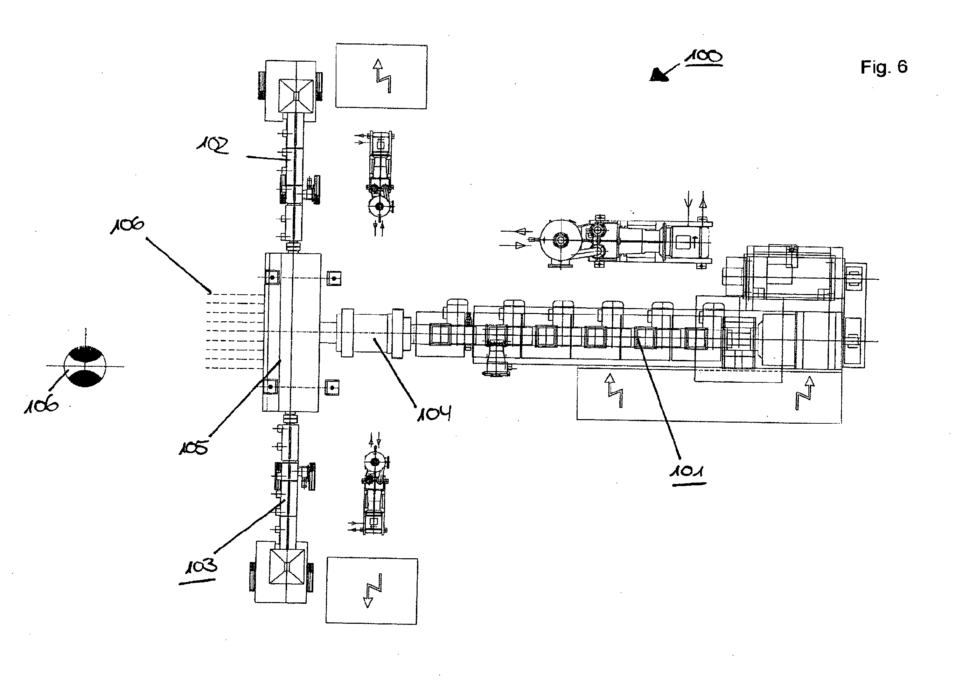

Figure 6 shows a further extruder arrangement 100 consisting of a main extruder 101 and two co-extruders 102, 103. The main extruder 101 is connected to the extruder nozzle 105 by an allocator 104 as in the previous embodiment. In this case merely a duplication of two co-extruders 102, 103 exists, which can thus feed two different plastic components to the extruder nozzle 105. The restiform plastic material 106 pressed out of the extruder lip consist of about one third of the material from the main extruder 101, whereas the two co-extruders 102, 103 feed the two additional plastic components and are co-extruded at the plastic component. In the embodiment of the restiform extruder material 106 shown it is apparent that it is an almost elliptical arrangement at the side. The geometry of the extruder nozzle can be varied upon demand, allowing for other cross-section shapes as well.

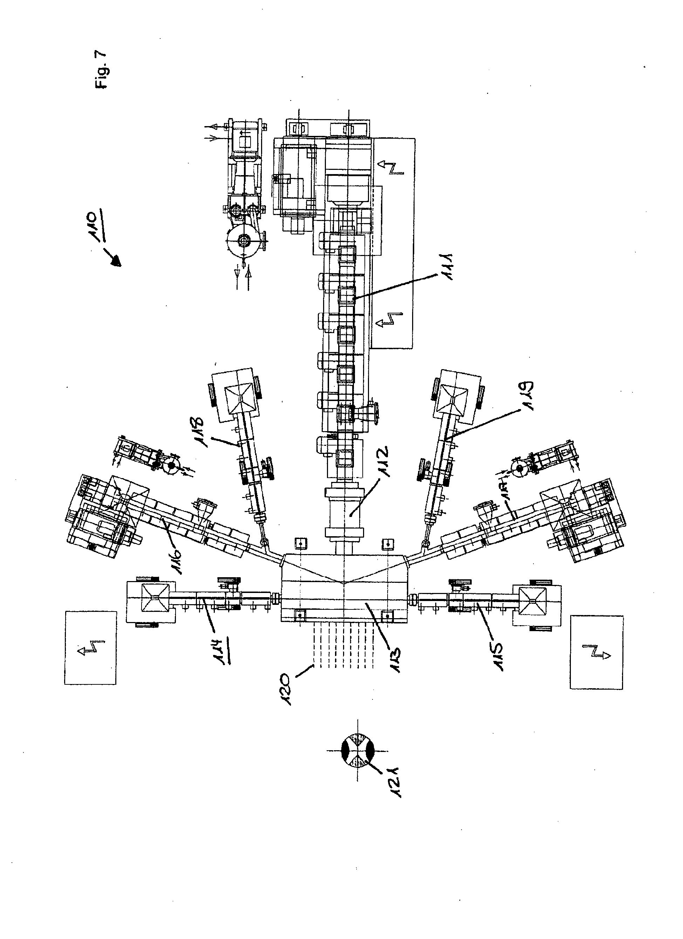

Figure 7 shows an extruder arrangement 110, which features a main extruder based on the previous embodiments directly connected to an allocator 112 and which feeds a first plastic component to the extruder nozzle 113 through said allocator 112. Further co-extruders, in fact six in total, are directly connected to the extruder nozzle 113. As in the previous embodiment two co-extruders 114, 115 are flange-mounted to the side of the extruder nozzle 113, while two further co-extruders 116, 117 are connected to the extruder nozzle 113 through by-pass extruders 118, 119 in the rear area. Each co-extruder 116, 118 and 117, 119 respectively can feed mixed plastic components to the extruder nozzle 113, whereat the mixing ratio can be preset. Also there is the possibility to regulate the percentage of plastic components coming from the co-extruders 114, 115, so that a certain mixing ratio of all plastic components can be set. The restiform plastic material 120 is pressed out of the extruder nozzle 113, whereat said plastic material features an almost cross-shaped first plastic component in the cross-section, while two further plastic components were added at the sides by means of co-extrusion and mixed plastic components are fed from the further co-extruders 116, 118 and 117, 119 respectively, and attached in co-extruded form. In this case an almost round co-extruded restiform material 120 is produced as well, which can consist of a total of seven individual plastic components.

The main advantage of the extruder arrangement according to embodiments 1 to 7 is that a main extruder is basically responsible for the material component contributing the majority. The additional co-extruders can feed another material component either in pure form or in a mixed form to the extruder nozzle 113, whereas there is always the possibility to enable or disable individual co-extruders, allowing for any mixture of the first plastic component with further material components. The co-extruders are designed to deliver only a small amount of material to the extruder nozzle in order to allow for an appropriate dosage. This does not only allow for the disabling of individual co-extruders, but also for regulating the material flow to achieve a certain mixing ratio demanded by the customer when producing the granulated material. The plastic components fed by the further co-extruders serve different purposes, e.g. influencing the material properties of the plastic component of the main extruder.

The special advantage of the invention at hand is that any mixing ratios can be produced with a complex extruder arrangement and one of the intended additional plastic components can be chosen on demand. In case the co-extruders are connected to the allocator said allocator can enable and disable the material flow of individual co-extruders on demand. Furthermore, a switching from the feeding channel to the extruder nozzle could occur.

Instead of using round plastic materials plate-shaped plastic materials can be produced due to corresponding forming of the extruder nozzle.

### List of reference numbers

- 1: Extruder arrangement
- 2: Main extruder
- 3: Drive motor
- 4: Vacuum pump
- 5: Connection panel
- 6: Allocator
- 7: Extruder nozzle
- 8: Co-extruder
- 9: Vacuum pump
- 10: Drive motor
- 11: Connection panel
- 12: Plastic material
- 20: Extruder arrangement
- 21: Main extruder
- 22: Drive motor
- 23: Vacuum pump
- 24: Connection panel
- 25: Allocator
- 26: Co-extruder
- 27: Co-extruder
- 28: Drive motor
- 29: Drive motor
- 30: Vacuum pump
- 31: Vacuum pump
- 32: Connection panel
- 33: Connection panel
- 34: Extruder nozzle
- 35: Plastic material
- 40: Extruder arrangement
- 41: Main extruder
- 42: Vacuum pump
- 43: Drive motor
- 44: Connection panel
- 45: Allocator
- 46: Co-extruder
- 47: Co-extruder
- 48: Drive motor
- 49: Drive motor
- 50: Vacuum pump
- 51: Vacuum pump
- 52: Co-extruder
- 53: Extruder nozzle
- 60: Extruder arrangement
- 61: Main extruder
- 62: Co-extruder
- 63: Co-extruder
- 64: Allocator
- 65: Co-extruder
- 66: Co-extruder
- 67: Extruder nozzle
- 68: Plastic material
- 80: Extruder arrangement
- 81: Main extruder
- 82: Co-extruder
- 83: Allocator
- 84: Extruder nozzle
- 85: Plastic material
- 100: Extruder arrangement
- 101: Main extruder
- 102: Co-extruder
- 103: Co-extruder
- 104: Allocator
- 105: Extruder nozzle
- 106: Plastic material
- 110: Extruder arrangement
- 111: Main extruder
- 112: Allocator
- 113: Extruder nozzle
- 114: Co-extruder
- 115: Co-extruder
- 116: Co-extruder
- 117: Co-extruder
- 118: By-pass-extruder
- 119: By-pass-extruder
- 120: Plastic material

## Claims

1. Method for producing extruded plastic elements, in particular granulated material or calibration targets for further processing, comprising the steps:
- Feeding a first plastic component to a main extruder (21, 41, 61, 81, 101, 111);
- Transmission of the plasticized plastic component to an allocator (25, 45, 64, 83, 104, 112);
- Feeding of at least one more plastic component to at least one co-extruder (26, 27, 46, 47, 52, 62, 63, 65, 66, 82, 102, 103, 114, 115, 116, 117);
- Transmission of the at least one plasticized plastic component;
- Feeding of the plastic component intended for extrusion and co-extrusion through the allocator (25, 45, 64, 83, 104, 112) or immediately to an extruder nozzle (34, 53, 67, 84, 105, 113), whereat the plastic components are at least partially fed separately to the extruder nozzle (34, 53, 67, 84, 105,113).

2. Method according to claim 1,
**characterized in that**
the plastic elements feature a percentage of 30 to 90 %, preferably of 50 to 80 % of the first plastic component and/or the plastic elements feature a percentage of 10 to 70% of at least one further plastic component and/or the plastic elements feature a percentage of 1 to 10 % of several plastic components, whereat up to ten different plastic components may be fed.

3. Method according to claim 1 or 2,
**characterized in that**
the further plastic components are co-extruded mixed or unmixed with the first plastic component, and/or the further plastic components enriched with additives are co-extruded with the first plastic component.

4. Method according to one of the claims 1, 2 or 3,
**characterized in that**
several co-extruders (26, 27, 46, 47, 52, 62, 63, 65, 66, 82, 102, 103, 114, 115, 116, 117) are connected to the allocators (25, 45, 64, 83, 104, 112), whereat merely a single or several plastic components of the co-extruders (26, 27, 46, 47, 52, 62, 63, 65, 66, 82, 102, 103, 114, 115, 116, 117) are temporarily fed to the extruder nozzle (34, 53, 67, 84, 105, 113), and/or the individual co-extruders (26, 27, 46, 47, 52, 62, 63, 65, 66, 82, 102, 103, 114, 115, 116, 117) are immediately connected to an extruder nozzle (34, 53, 67, 84, 105, 113).

5. Method according to one of the claims 1 to 4,
**characterized in that**
the feeding, blocking or by-passing of a plastic component is conducted by the allocator (25, 45, 64, 83, 104, 112).

6. Apparatus for applying the method according to one of the claims 1 to 5 for producing extruded plastic elements, in particular granulated material or calibration targets for further processing, comprising at least one main extruder and at least one co-extruder (26, 27, 46, 47, 52, 62, 63, 65, 66, 82, 102, 103, 114, 115, 116, 117),
**characterized in that**
the main extruder (21, 41, 61, 81, 101, 111) is connected to an allocator (25, 45, 64, 83, 104, 112), whereat the allocator (25, 45, 64, 83, 104, 112) feeds the plastic component to an extruder nozzle (34, 53, 67, 84, 105, 113) and the at least one co-extruder (26, 27, 46, 47, 52, 62, 63, 65, 66, 82, 102, 103, 114, 115, 116, 117) is connected to the allocator (25, 45, 64, 83, 104, 112) or directly to the extruder nozzle(34, 53, 67, 84, 105, 113) for transmitting a further plastic component.

7. Apparatus according to claim 6,
**characterized in that**
the co-extruders (26, 27, 46, 47, 52, 62, 63, 65, 66, 82, 102, 103, 114, 115, 116, 117) are arranged as a group around the allocator (25, 45, 64, 83, 104, 112) or the extruder nozzle (34, 53, 67, 84, 105, 113).

8. Apparatus according to claim 6 or 7,
**characterized in that**
the co-extruders (26, 27, 46, 47, 52, 62, 63, 65, 66, 82, 102, 103, 114, 115, 116, 117) feature a considerably lower capacity output than the main extruder (21, 41, 61, 81, 101, 111).

9. Apparatus according to claim 6, 7 or 8,
**characterized in that**
the co-extruders (26, 27, 46, 47, 52, 62, 63, 65, 66, 82, 102, 103, 114, 115, 116, 117) are optionally designed to be switched on and off, allowing for a change of the plastic components.

10. Apparatus according to one of the claims 6 to 9,
**characterized in that**
the allocator (25, 45, 64, 83, 104, 112) features a main feeding channel, in which the first plastic component of the main extruder (21, 41, 61, 81, 101, 111) is immediately fed to the extruder nozzle (34, 53, 67, 84, 105, 113), and/or the allocator (25, 45, 64, 83, 104, 112) features several feeding channels, which are each connected to a co-extruder (26, 27, 46, 47, 52, 62, 63, 65, 66, 82, 102, 103, 114, 115, 116, 117) with one end and are fed to the extruder nozzle (34, 53, 67, 84, 105, 113) with the other end.

11. Apparatus according to one of the claims 6 to 10,
**characterized in that**
that the allocator (25, 45, 64, 83, 104, 112) features at least one, preferably several, switching device for by-passing the plastic component of one co-extruder (26, 27, 46, 47, 52, 62, 63, 65, 66, 82, 102, 103, 114, 115, 116, 117) to another feeding channel if desired.

12. Apparatus according to at least one of the claims 6 to 11
**characterized in that**
the allocator (25, 45, 64, 83, 104, 112) feeds the different plastic components individually to the extrusion nozzle.

13. Granulated material or calibration target produced according to one of the process claims 1 to 5 by means of an apparatus according to claim 6 to 12
**characterized in that**
the granulated material consists of an inner core or a substrate when viewed in cross section, and/or the calibration target consists of a first plastic component in a section and further sections consist of co-extruded plastic components when viewed in cross section.

14. Granulated material or calibration target according to claim 13,
**characterized in that**
the cross section is a square, a rectangle, a polygon, a circle or an oval and a co-extrusion (26, 27, 46, 47, 52, 62, 63, 65, 66, 82, 102, 103, 114,115, 116, 117) occurs on the outer surface or the substrate.

15. Granulated material or calibration target according to claim 13 or 14,
**characterized in that**
the co-extruded material are applied on top of each other in a sandwich structure on the first plastic component for a rectangular cross-section, and/or that the co-extruded plastic materials are distributed next to each other over the circumference of the different cross-section profiles, and/or that the co-extruded plastic materials are distributed at least partly overlapping over the circumference of the different cross-section profiles on the outer surface of the first plastic component, and/or the co-extruded plastic materials are arranged in a notch of the first plastic component, and/or that individual sections of the calibration target consist of different plastic components.
